# EUROPÄISCHE PATENTSCHRIFT

(11) **EP 0 808 752 B1**
(45) Veröffentlichungstag und Bekanntmachung des Hinweises auf die Patenterteilung: **21.07.1999**
(21) Anmeldenummer: 97107636.9
(22) Anmeldetag: 09.05.1997
(51) Int. Cl.: B60R 22/46

(54) **Gurtstraffer für ein Fahrzeuginsassen-Rückhaltesystem**
Belt tensioner of a vehicle occupant restraint system
Tendeur de ceinture d'un dispositif de retenue des passagers d'un véhicule

(30) Priorität: 20.05.1996 DE 29609054 U
(43) Veröffentlichungstag der Anmeldung: 26.11.1997
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- EP-A- 0 588 264
- EP-A- 0 625 450
- FR-A- 2 636 899
- US-A- 4 458 921

## Beschreibung

Die Erfindung betrifft einen Gurtstraffer für ein Fahrzeuginsassen-Rückhaltesystem, mit einer Kolben-Zylinder-Einheit, mit einem sich durch eine stirnseitige Öffnung in der Zylinderwandung erstreckenden Verbindungsteil zwischen Kolben und einem Gurtanlenkglied und mit einer ringförmigen Dichtung zwischen der Öffnung und dem Verbindungsteil.

Bei bislang bekannten Gurtstraffern mit einer Kolben-Zylinder-Einheit, bei denen ein pyrotechnischer Antrieb des Kolbens vorgesehen ist, erstreckt sich das Verbindungsteil durch eine möglichst exakt an den Außendurchmesser des Verbindungsteils abgestimmte Öffnung in der Zylinderwandung, wobei verhindert werden muß, daß ein zu großer Spalt zwischen der Öffnung und dem Verbindungsteil entsteht, über den erzeugtes Gas ausströmen kann. Das Verbindungsteil ist dabei entweder eine Kolbenstange oder ein Zugseil mit möglichst glatter Außenfläche. In der stirnseitigen Öffnung kann auch eine Ringdichtung vorgesehen sein, die ein Ausströmen des Gases verhindern soll. Bislang übliche Dichtungen sind so ausgelegt, daß die Reibungskraft zwischen der Dichtung und dem Verbindungsteil möglichst gering ist und das Verbindungsteil samt des Gurtanlenkglieds leicht verschoben werden kann. Insbesondere aufgrund des hohen Zylinderinnendrucks bei aktiviertem Gasgenerator und bei Verwendung eines Zugseils als Verbindungsteil treten jedoch trotz der Verwendung einer Dichtung Leckageströme auf, die den Zylinderinnendruck und damit die vom Gurtstraffer aufgebrachte Rückstrammkraft verringern.

Aus der EP 0 625 450 A ist ein gattungsgemäßer Gurtstraffer bekannt. Dieser Gurtstraffer hat ein Umlenkteil, in dem das als Verbindungsteil wirkende Zugseil umgelenkt wird. An dieses Umlenkteil schließt sich eine Kolben/Zylinder-Einheit zum Antrieb des Zugseils an. Im Bereich des Umlenkteils ist eine kegelförmige Dichtung aus weichem Gummi angeordnet, die das Seil umgibt und darauf in gewissem Maße drückt, damit die wellenförmige Oberfläche des Seiles nicht zu Leckageströmungen führt.

Die Erfindung schafft einen Gurtstraffer, dessen Verbindungsteil gegenüber der stirnseitigen Öffnung deutlich besser abgedichtet ist als bei üblichen Gurtstraffern.

Dies wird bei einem erfindungsgemäßen Gurtstraffer der eingangs genannten Art dadurch erreicht, daR die Dichtung über ihren Umfang gleichmäßig so am Verbindungsteil angreift, daß eine der Längsverschiebung des Verbindungsteils entgegewirkende Klemmkraft auf das Verbindungsteil von mehr als 100 N, gemessen in Straffrichtung, ausgeübt wird.

Während bei bisherigen Gurtstraffern stets versucht wurde, den Kontakt zwischen der Dichtung und dem Verbindungsteil möglichst reibungsarm auszuführen, sieht die Erfindung vor, daß eine relativ schwer lösbare Verbindung zwischen diesen Teilen vorhanden ist. Die bei der Aktivierung zu überwindende, gegenüber bekannten Gurtstraffern höhere Kraft wird durch den höheren Zylinderinnendruck aufgrund der Reduzierung von Leckströmen mehr als kompensiert, so daß der erfindungsgemäße Gurtstraffer insgesamt eine höhere Rückstrammkraft erzeugt als bislang bekannte.

Vorzugsweise beträgt die der Längsverschiebung entgegengesetzte Kraft nicht nur mehr als 100 N, sondern mehr als etwa 600 N.

Weiter ist die Dichtung vorteilhafterweise so ausgebildet, daß sie ein ungewolltes Drehen des Verbindungsglieds in der Öffnung weitgehend verhindert, solange z.B. an einem Gurtschloß, das an das Verbindungsteil gekoppelt ist, unbeabsichtigt gedreht wird. Einem gewaltsamen Drehen des Verbindungsteils soll die Dichtung eine relativ hohe Gegenkraft entgegenbringen.

Es sind verschiedene Möglichkeiten denkbar, die von der Dichtung auf das Verbindungsteil ausgeübte Kraft zu erzeugen oder sie zu verstärken. Gemäß einer Ausführungsform ist vorgesehen, daß die Dichtung elastisch ist und mit einem Preßsitz in den Zylinder eingebaut ist. Damit wird die Dichtung zusammengepreßt, so daß ihre Öffnung, durch die sich das Verbindungsteil hindurch erstreckt, bestrebt ist, sich zu verengen, wodurch die Klemmkraft erzeugt oder erhöht wird.

Bei einer anderen Ausführungsform ist vorgesehen, daß an einer Außenfläche der Dichtung ein Spannelement angreift, um die Dichtung zusammenzudrücken und die radiale Klemmkraft zu erzeugen oder zu verstärken. Das Spannelement greift vorzugsweise an einem Abschnitt der Dichtung an, welcher stirnseitig aus dem Zylinder ragt.

Gemäß einer weiteren Ausführungsform erstreckt sich im Inneren des Zylinders ein Treibsatz mit einer kreisringförmigen, mit pyrotechnischem Material gefüllten Hülse in radialer Richtung zwischen der inneren Mantelfläche des Zylinders und der Dichtung. Dies sorgt für einen kompakten Aufbau des Zylinders im Bereich des Treibsatzes. Die Hülse kann jedoch auch dazu verwendet werden, die Klemmkraft zu erhöhen, indem sich vorzugsweise ihre Innenwandung in Richtung zum Austrittsende des zu erzeugenden Gases hin verjüngt, wodurch die Dichtung zum Austrittsende hin zunehmend zusammengepreßt wird. Ferner kann vorgesehen sein, daß die Innenwandung der Hülse zur Erzeugung einer erhöhten Klemmkraft beim Zünden des pyrotechnischen Materials in radialer Richtung nachgiebig ausgebildet ist. Das bei Aktivierung des Gurtstraffers erzeugte Gas bewirkt über die nachgiebige Hülse eine erhöhte Klemmkraft und eine bessere Abdichtung.

Die Dichtung kann eine Doppelfunktion aufweisen, indem sie, gemäß einer weiteren Ausgestaltung der Erfindung, als Dämpfer für ein an dem Verbindungsteil befestigtes Anschlagteil ausgebildet ist, das am Ende des Straffweges auf die Dichtung trifft. Bislang übliche Dämpfungselemente wie plastisch verformbare zusätzliche dicke Wandungsabschnitte an der Zylinderaußenfläche oder am Anschlagteil können damit entfallen.

Ist das Verbindungsteil als Zugseil ausgebildet, ist die Außenmantelfläche nichtzylindrisch und deshalb schwer abzudichten. Erfindungsgemäß ist vorgesehen, daß auf das Zugseil zumindest im Bereich der Dichtung eine Bechichtung aufgebracht oder das Seil in Beschichtungsmaterial getränkt ist. Dadurch lassen sich beliebig glatte und gleichmäßige Außenkonturen herstellen, durch die sich ein ansonsten vorhandener Dichtspalt verringern läßt. Dringt das aushärtbare Dichtungsmaterial in das Seilinnere ein, können Leckageströme im Inneren des Zugseils verringert werden.

Eine einfache Herstellung der Dichtung aus Kunststoff besteht im Aufspritzen der Dichtung auf das Verbindungsteil. Es wird damit eine Verbindung zwischen Dichtung und Verbindungsteil geschaffen, welche erst durch Anlegen einer Kraft von mehr als 100 N, vorzugsweise von mehr als etwa 600 N gelöst wird. Da bei dieser Ausgestaltung der Erfindung die Dichtung in ihrer Form optimal an die Außenkontur des Verbindungsteils angepaßt ist, treten kaum noch Leckageströme auf.

Ferner kann das Verbindungsteil auch in der Dichtung vergossen sein, wenn diese als Kunststoffdichtung ausgebildet ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1 eine Längsschnittansicht durch einen erfindungsgemäßen Gurtstraffer gemäß einer ersten Ausführungsform im Bereich der Stirnseite, durch die sich das Verbindungsteil erstreckt,
- Fig. 2 eine Querschnittsansicht nach der Linie II-II in Fig. 1,
- Fig. 3 eine Längsschnittansicht des in Fig. 1 gezeigten Gurtstraffers am Ende des Straffvorgangs, und
- Fig. 4 eine Längsschnittansicht durch einen Gurtstraffer gemäß einer zweiten Ausführungsform.

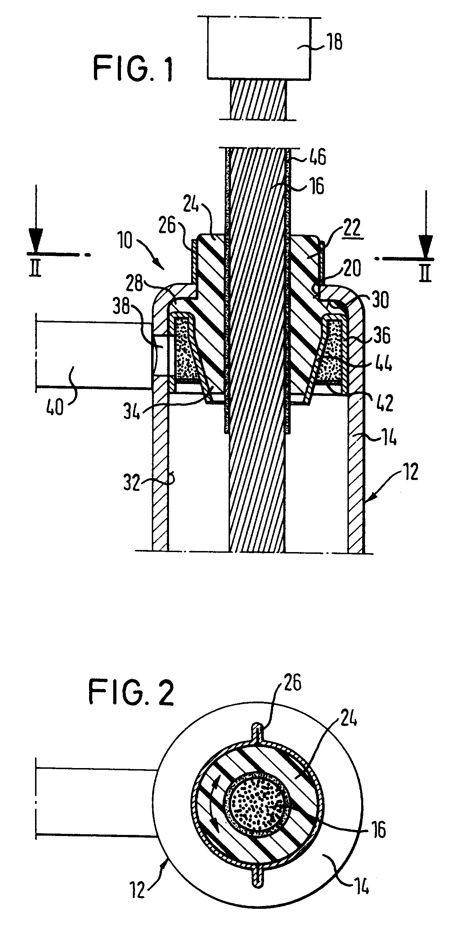

In Fig. 1 ist ein Gurtstraffer 10 für ein Fahrzeuginsassen-Rückhaltesystem gezeigt, der eine Kolben-Zylinder-Einheit 12 mit einem Zylinder 14 und einem nicht gezeigten Kolben umfaßt. Ein am Kolben arretiertes Verbindungsteil in Form eines flexiblen Zugseils 16 ist ferner an einem Gurtanlenkglied in Form eines Gurtschlosses 18 befestigt. Das Zugseil 16 erstreckt sich dabei durch eine Öffnung 20 in einer Stirnseite des Zylinders 14. Im Bereich der Öffnung 20 ist eine Dichtung 22 vorgesehen, die mit einem Abschnitt 24 aus dem Zylinder 14 ragt. An ihrer Außenfläche im Bereich des Abschnitts 24 greift ein Spannelement 26 in Form eines Crimprings an, der in Fig. 2 exakter gezeigt ist. Darüber hinaus ist es auch möglich, das Spannelement 26 als Rohrschelle auszubilden. Die Funktion des Spannelements 26 besteht darin, den aus dem Zylinder 14 ragenden Abschnitt 24 radial zusammenzupressen, so daß die Dichtung 22 eine radiale Klemmkraft auf das Zugseil 16 ausübt.

Der Durchmesser der Öffnung 20 und der Außendurchmesser der Dichtung 22 im Bereich der Öffnung sind so aufeinander abgestimmt, daß sich eine Preßpassung ergibt, aufgrund der auch im Bereich der Öffnung 20 gleichmäßig über den Außenumfang des Zugseils 16 eine Klemmkraft der Dichtung 22 gegenüber dem Zugseil 16 ausgeübt wird. Im Inneren des Zylinders 14 ist ein radial vorstehender Ringflansch 28 an die Dichtung 22 angeformt, der an der inneren Stirnfläche 30 des Zylinders 14 anliegt, sich radial bis zur inneren Mantelfläche 32 des Zylinders 14 erstreckt und damit eine gute Abdichtung zwischen der Dichtung 22 selbst und der Öffnung 20 schafft. An den Ringflansch 28 schließt sich ein zylindrischer Abschnitt 34 der Dichtung 22 an.

Im Inneren des Zylinders 14 ist ein Treibsatz mit einer kreisringförmigen Hülse 36 vorgesehen, die mit pyrotechnischem Material gefüllt ist. Über eine gemeinsame Öffnung 38 in der Hülse 36 und im Zylindermantel kann über einen Zünder 40 das pyrotechnische Material im Inneren der Hülse 36 entzündet werden. Die Hülse 36 hat an ihrem unteren stirnseitigen Ende mehrere Gasaustrittsöffnungen oder ist komplett offen ausgebildet, wobei die Gasaustrittsöffnungen oder das gesamte stirnseitige Ende durch einen auch im Bereich der Öffnung 38 vorhandenen Versiegelungslack 42 oder eine Versiegelungsfolie gegen Feuchtigkeitseintritt geschlossen sind. Die untere Stirnseite der Hülse 36 ist nicht im Bereich der unteren Ränder ihrer Außenwandung und ihrer Innenwandung 44 angeordnet, sondern liegt geschützt etwas im Hülseninneren. Die Stirnfläche grenzt nämlich direkt an das pyrotechnische Material an, und dieses füllt die Hülse 36 nicht bis in den Bereich der unteren Ränder aus, um bei einem unsachgemäßen Transport ein unbeabsichtigtes Zünden zu verhindern. Die Innenwandung 44 verjüngt sich zu ihrem unteren Ende hin und drückt damit die Dichtung 22 im Bereich des Abschnitts 34 radial nach innen, so daß die Dichtung 22 auch in diesem Abschnitt eine radiale Klemmkraft auf das Zugseil 16 ausübt.

Die gesamte, von der Dichtung 22 auf das Zugseil 16 ausgeübte Klemmkraft beträgt, in Längsrichtung des Zugseils 16 gemessen, mindestens 100 N, vorzugsweise etwa mindestens 600 N. Die Verbindung der Dichtung 22 mit dem Zugseil 16 aufgrund der Klemmkraft bewirkt auch, daß sich das Zugseil 16 nur unter erheblichen Kraftaufwand, wie in Fig. 2 anhand eines zweiseitigen Pfeils gezeigt ist, drehen läßt. Damit wird ein ungewolltes Verdrehen des Zugseils 16 und des Gurtschlosses 18 zumindest erschwert.

Da das Zugseil 16 eine äußere Mantelfläche aufweist, die keine exakte Zylinderfläche darstellt, ist es zumindest im Bereich der Dichtung 22 mit einer Beschichtung 46 aus Kunststoff versehen, die ihm eine exakte zylindrische Außenkontur gibt. Das Zugseil 16 kann dabei z.B. in ein aushärtbares Dichtungsmittel wie Silikon getränkt werden, was den Vorteil hat, daß zwischen den Fasern des Zugseils 16 zumindest im radial äußeren Bereich des Zugseils 16 keine Leckageströme nach der Aktivierung des Gurtstraffers 10 auftreten können. Die Beschichtung 46 kann selbstverständlich auch als bislang üblicher Schrumpfschlauch ausgebildet sein.

In der bislang beschriebenen Ausführungsform wird die Kraft, die einer Längsverschiebung des Zugseils 16 entgegengesetzt wird, durch die radiale Klemmkraft ausgeübt, die eine Haftreibungskraft zwischen Zugseil 16 und Dichtung 22 hervorruft.

Darüber hinaus ist es jedoch auch möglich, die Dichtung 22 als Kunststoffdichtung auszubilden, die direkt auf das beschichtete oder unbeschichtete Zugseil 16 aufgespritzt ist. Ferner kann das Zugseil 16 auch in der Dichtung 22 vergossen werden, was ebenfalls in einer Kunststoffspritzmaschine erfolgen kann.

Wenn die Beschichtung 46 nicht gewünscht ist, kann der flüssige oder teigige Kunststoff für die Dichtung 22 unter Druck in die Vertiefungen an der Außenfläche des Zugseils 16 und in die Zwischenräume zwischen den Fasern des Zugseils 16 eindringen, was eine erhöhte Dichtwirkung zur Folge hat. Auf diese Weise wird die der Längsverschiebung des Zugseils 16 entgegengesetzte Kraft nicht nur durch eine Klemmkraft erzeugt, sondern abhängig von dem Material der Dichtung 22, auch durch adhäsive Kräfte und teilweisen Formschluß.

Durch die hohen Klemmkräfte und, falls vorgesehen, durch das Aufspritzen der Dichtung 22 auf das Zugseil 16 oder das Vergießen des Zugseils 16 in der Dichtung 22 ergibt sich selbst bei hohen Drücken im Inneren des Zylinders 14 keinerlei Dichtspalt zwischen Zugseil 16 und der Dichtung 22.

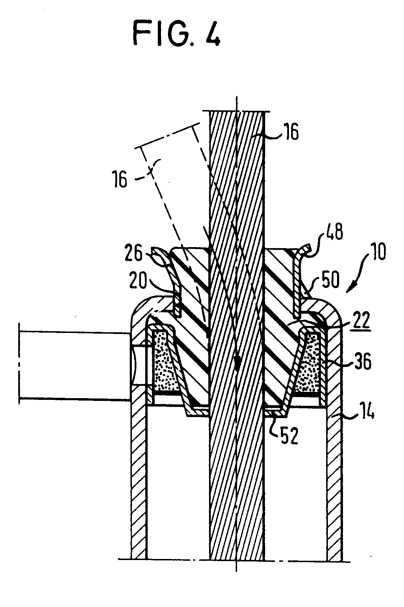

Die in Fig. 4 gezeigte zweite Ausführungsform des Gurtstraffers 10 unterscheidet sich von der in den Fign. 1 bis 3 gezeigten ersten Ausführungsform darin, daß das Spannelement 26 ein sich zum Gurtschloß 18 hin erweiterndes Ende aufweist und durch die Öffnung 20, in der sie sich zusätzlich abstützt, bis in das Innere des Zylinders 14 ragt. Das sich erweiternde Ende des Spannelements 26 kann gemäß seiner in Fig. 4 gezeigten linken Hälfte trichterförmig ausgeführt sein, so daß sich das Spannelement 26 zur Öffnung 20 hin konisch verjüngt, oder es kann ein gerundetes Ende 48 aufweisen, wie dies ist in der rechten Hälfte des Spannelements 26 dargestellt ist. Die Ausführungsform nach Fig. 4 erlaubt es, daß das Zugseil 16, wie mit unterbrochenen Linien gezeigt ist, schräg in den Zylinder 14 läuft. Ohne das sich erweiternde Ende bestünde bei einem schräg in den Zylinder 14 laufenden Zugseil 16 die Gefahr, daß die Dichtung 22 so stark zusammengepreßt wird, daß das Zugseil 16 am Spannelement 26 streift und sich die Teile gegenseitig beschädigen.

Mehrere am Außenumfang des Spannelements 26 vorgesehene Rippen 50 dienen zu seiner Abstützung am Zylinder 14 und verhindern, daß sich das Spannelement 26 bei einem nicht linear in den Zylinder 14 einlaufenden Zugseil 16 verformt oder verschiebt.

Im Rückhaltefall bewirkt der schräge Einlauf des Zugseils 16 in den Zylinder 14, daß das Zugseil 16 bestrebt ist, die Dichtung 22 mitzureißen. Ein geschlossenes unteres Ende 52 der Hülse 36 schließt aus, daß die Dichtung 22 aus ihrer Lagerung in der Hülse 36 gerissen wird. Das Ende 52 ist dabei so gestaltet, daß es das Zugseil 16 mit einem möglichst geringen Spalt umschließt.

Die Wirkungsweise des Gurtstraffers wird nun anhand der Fign. 1 bis 3 näher erläutert. In einem Kollisionsfall wird durch den Zünder 40 das pyrotechnische Material im Inneren der Hülse 36 entzündet und Gas erzeugt. Das Gas tritt in den Zylinderraum 14, wobei durch die nach unten über die Dichtung 22 vorstehende Innenwandung 44 verhindert wird, daß beim Abbrennen des pyrotechnischen Materials die Flamme direkt auf das Zugseil 16 gerichtet ist. Die Innenwandung 44 ist in radialer Richtung nachgiebig ausgebildet, so daß sie durch den erzeugten hohen Gasdruck radial nach innen gedrückt wird und damit im Bereich des Abschnitts 34 eine erhöhte radiale Klemmkraft auf das Zugseil 16 ausübt, was insbesondere deshalb vorteilhaft ist, da in diesem Bereich die größte Gefahr besteht, daß sich aufgrund des hohen Gasdrucks ein Spalt zwischen dem Zugseil 16 und der Dichtung 22 bildet.

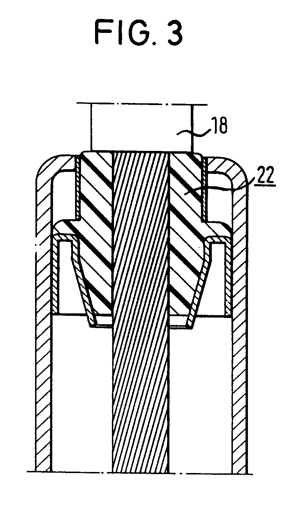

Aufgrund der auf den Kolben ausgeübten Kraft, die ohne weiteres in der Lage ist, die durch die Dichtung 22 einer Verschiebung des Zugseils 16 entgegenwirkende Kraft zu überwinden, wird über das Zugseil 16 das Gurtschloß 18 nach unten gezogen, bis ein Anschlagteil in Form des unteren stirnseitigen Endes des Gurtschlosses 18 oder des stirnseitigen Endes einer an das Gurtschloßgehäuse angrenzenden Seilbefestigung auf die elastisch ausgebildete Dichtung 22 trifft, die damit als Dämpfer wirkt. Durch den Aufprall kann die Dichtung 22, wie in Fig. 3 gezeigt, zusammen mit dem Spannelement 26 in das Innere des Zylinders 14 verschoben werden, wodurch sich der maximale Straffweg erhöht.

Aufgrund der Reib- und, was das unmittelbare Anformen der Dichtung 22 an dem Zugseil 16 betrifft, der teilweise sogar formschlüssigen Verbindung, ergibt sich eine gute Dichtwirkung, so daß Leckströme weitgehend verhindert werden können und sich die Rückstrammkraft erhöht.

## Patentansprüche

1. Gurtstraffer für ein Fahrzeuginsassen-Rückhaltesystem, mit einer Kolben-Zylinder-Einheit (12), mit einem sich durch eine stirnseitige Öffnung (20) in der Zylinderwandung erstreckenden Verbindungsteil zwischen Kolben und einem Gurtanlenkglied und mit einer ringförmigen Dichtung (22) zwischen der Öffnung (20) und dem Verbindungsteil, die auf das Verbindungsteil drückt, dadurch gekennzeichnet, daß die Dichtung (22) über ihren inneren Umfang gleichmäßig so am Verbindungsteil angreift, daß eine der Längsverschiebung des Verbindungsteils entgegenwirkende Klemmkraft auf das Verbindungsteil von mehr als 100 N, gemessen in Straffrichtung, ausgeübt wird.

2. Gurtstraffer nach Anspruch 1, dadurch gekennzeichnet, daß der Längsverschiebung durch die Dichtung (22) eine Kraft von mehr als etwa 600 N entgegengesetzt wird.

3. Gurtstraffer nach Anspruch 1 oder 2, dadurch gekennzeichnet, daß die Dichtung (22) ein ungewolltes Drehen des Verbindungsglieds in der Öffnung (20) weitgehend verhindert.

4. Gurtstraffer nach einem der vorstehenden Ansprüche, dadurch gekennzeichnet, daß die Dichtung (22) elastisch ist und mit einem Preßsitz im Zylinder (14) eingebaut ist, um eine von der Dichtung (22) auf das Verbindungsteil ausgeübte radiale Klemmkraft zu erzeugen oder zu verstärken.

5. Gurtstraffer nach einem der vorstehenden Ansprüche, dadurch gekennzeichnet, daß an einer Außenfläche der Dichtung (22) ein Spannelement (26) angreift, um die Dichtung (22) zusammenzudrücken und eine auf das Verbindungsteil ausgeübte radiale Klemmkraft zu erzeugen oder zu verstärken.

6. Gurtstraffer nach Anspruch 5, dadurch gekennzeichnet, daß die Dichtung (22) stirnseitig aus dem Zylinder (14) ragt und das Spannelement (26) zumindest teilweise außerhalb des Zylinders (14) angreift.

7. Gurtstraffer nach Anspruch 6, dadurch gekennzeichnet, daß das Spannelement (26) ein sich zum Gurtanlenkglied erweiterndes Ende aufweist.

8. Gurtstraffer nach einem der vorstehenden Ansprüche, dadurch gekennzeichnet, daß sich im Inneren des Zylinders (14) ein Treibsatz mit einer kreisringförmigen, mit pyrotechnischem Material gefüllten Hülse (36) in radialer Richtung zwischen der inneren Mantelfläche (32) des Zylinders (14) und der Dichtung (22) erstreckt.

9. Gurtstraffer nach Anspruch 8, dadurch gekennzeichnet, daß sich eine Innenwandung (44) der Hülse (36) in Richtung zum Austrittsende des zu erzeugenden Gases aus der Hülse (36) verjüngt, um die Dichtung (22) zusammenzudrücken und eine von der Dichtung (22) auf das Zugseil (16) ausgeübte radiale Klemmkraft zu erzeugen oder zu verstärken.

10. Gurtstraffer nach Anspruch 8 oder 9, dadurch gekennzeichnet, daß eine Innenwandung (44) der Hülse zur Erzeugung einer erhöhten Klemmkraft beim Zünden des pyrotechnischen Materials in radialer Richtung nachgiebig ausgebildet ist.

11. Gurtstraffer nach einem der Ansprüche 8 bis 10, dadurch gekennzeichnet, daß Gasaustrittsöffnungen in und die Form der Hülse (36) so aufeinander abgestimmt sind, daß das erzeugte Gas im Bereich der Gasaustrittsöffnungen nicht unmittelbar auf das Verbindungsteil gelenkt wird.

12. Gurtstraffer nach einem der vorstehenden Ansprüche, dadurch gekennzeichnet, daß die Dichtung (22) als Dämpfer für ein an dem Verbindungsteil befestigtes Anschlagteil ausgebildet ist, das am Ende des Straffweges auf die Dichtung (22) trifft.

13. Gurtstraffer nach Anspruch 12, dadurch gekennzeichnet, daß die Dichtung (22) durch das auftreffende Anschlagteil axial verschoben wird.

14. Gurtstraffer nach einem der vorstehenden Ansprüche, dadurch gekennzeichnet, daß das Verbindungsteil ein Zugseil (16) ist, auf das zumindest im Bereich der Dichtung (22) eine Beschichtung aufgebracht oder das mit aushärtendem Beschichtungsmaterial getränkt ist.

15. Gurtstraffer nach einem der vorstehenden Ansprüche, dadurch gekennzeichnet, daß die Dichtung (22) als auf das Verbindungsteil aufgespritzte Kunststoffdichtung ausgebildet ist.

16. Gurtstraffer nach einem der Ansprüche 1 bis 14, dadurch gekennzeichnet, daß die Dichtung (22) eine Kunststoffdichtung ist und das Verbindungsteil in der Dichtung (22) vergossen ist.

## Claims

1. A belt pretensioner for a vehicular occupant restraint system comprising a piston/cylinder unit (12), a connecting part between the piston and a belt linking member extending through an end face opening (20) in the cylinder wall, and a ring-shaped seal (22) between said opening (20) and said connecting part, which exerts a pressure on said connecting part, characterized in that said seal (22) uniformly engages said connecting part about its inner periphery such that a clamping force of more than 100 N, as measured in the tensioning direction, is exerted on said connecting part and counteracts the longitudinal displacement of said connecting part.

2. The belt pretensioner as set forth in claim 1, characterized in that said seal (22) counteracts said longitudinal displacement by a force of more than about 600 N.

3. The belt pretensioner as set forth in claim 1 or 2, characterized in that said seal (22) largely prevents any undesired turning of said connecting part in said opening (20).

4. The belt pretensioner as set forth in any of the preceding claims, characterized in that said seal (22) is elastic and is mounted in said cylinder (14) with a press fit to generate or to boost a radial clamping force exerted by said seal (22) on said connecting part.

5. The belt pretensioner as set forth in any of the preceding claims, characterized in that an outer surface of said seal (22) is engaged by a clamping element (26) to compress said seal (22) and to generate or to boost a radial clamping force exerted on said connecting part.

6. The belt pretensioner as set forth in claim 5, characterized in that said seal (22) protrudes from an end face of said cylinder (14) and is engaged by said clamping element (26) at least partly outside of said cylinder (14).

7. The belt pretensioner as set forth in claim 6, characterized in that said clamping element (26) comprises an end flared towards said belt linking member.

8. The belt pretensioner as set forth in any of the preceding claims, characterized in that a propelling charge including a circularly ring-shaped sleeve (36) filled with pyrotechnical material radially extends within the interior of said cylinder (14) between the inner shell surface (32) of said cylinder (14) and said seal (22).

9. The belt pretensioner as set forth in claim 8, characterized in that an inner wall (44) of said sleeve (36) is tapered in the direction of the outlet end of the gas to be generated from said sleeve (36), to compress said seal (22) and to generate or to boost a radial clamping force exerted by said seal (22) on the traction cable (16).

10. The belt pretensioner as set forth in claim 8 or 9, characterized in that an inner wall (44) of said sleeve is pliantly configured in the radial direction to generate an increased clamping force on ignition of the pyrotechnical material.

11. The belt pretensioner as set forth in any of claims 8 to 10, characterized in that gas outlet orifices in the sleeve and the shape of said sleeve (36) are adapted to each other so that the generated gas is not directly directed towards the connecting part in the region of said gas outlet orifices.

12. The belt pretensioner as set forth in any of the preceding claims, characterized in that said seal (22) is configured as a damper for a stopper secured to said connecting part, said stopper impinging on said seal (22) at the end of the tensioning path.

13. The belt pretensioner as set forth in claim 12, characterized in that said seal (22) is axially displaced by said impinging stopper.

14. The belt pretensioner as set forth in any of the preceding claims, characterized in that said connecting part is a traction cable (16) on which a coating is applied at least in the region of said seal (22) or which is saturated with a curable coating material.

15. The belt pretensioner as set forth in any of the preceding claims, characterized in that said seal (22) is configured as a plastics seal injection molded on said connecting part.

16. The belt pretensioner as set forth in any of claims 1 to 14, characterized in that said seal (22) is a plastics seal and said connecting part is molded in said seal (22).

## Revendications

1. Tendeur de ceinture pour un système de retenue des occupants d'un véhicule, comprenant une unité à piston et cylindre (12), une pièce assurant la liaison entre le piston et un élément d'articulation de ceinture et traversant une ouverture (20) frontale de la paroi cylindrique, et un moyen d'étanchéité annulaire (22) entre l'ouverture (20) et la pièce de liaison, lequel appuie sur l'élément de liaison, caractérisé en ce que sur sa périphérie intérieure, le moyen d'étanchéité (22) attaque uniformément la pièce de liaison de telle sorte qu'une force de serrage supérieure à 100 N, mesurée en direction de tension, est exercée sur la pièce de liaison à l'encontre de la translation longidutinale de la pièce de liaison.

2. Tendeur de ceinture selon la revendication 1, caractérisé en ce que le moyen d'étanchéité (22) oppose à la translation longitudinale une force supérieure à environ 600 N.

3. Tendeur de ceinture selon la revendication 1 ou 2, caractérisé en ce que le moyen d'étanchéité (22) s'oppose en grande partie à une rotation accidentelle de l'élément de liaison dans l'ouverture (20).

4. Tendeur de ceinture selon l'une des revendications précédentes, caractérisé en ce que le moyen d'étanchéité (22) est élastique et monté à force dans le cylindre (14) pour produire ou amplifier la force de blocage radiale exercée sur la pièce de liaison par le moyen d'étanchéité (22).

5. Tendeur de ceinture selon l'une des revendications précédentes, caractérisé en ce que sur une surface extérieure du moyen d'étanchéité (22) agit un élément de serrage (26) pour comprimer le moyen d'étanchéité (22) et produire ou amplifier la force de blocage radiale exercée sur la pièce de liaison.

6. Tendeur de ceinture selon la revendication 5, caractérisé en ce que le moyen d'étanchéité (22) dépasse de la face frontale du cylindre (14), et l'élément de serrage (26) agit au moins partiellement à l'extérieur du cylindre (14).

7. Tendeur de ceinture selon la revendication 6, caractérisé en ce que l'élément de serrage (26) comporte une extrémité évasée en direction de l'élément d'articulation de ceinture.

8. Tendeur de ceinture selon l'une des revendications précédentes, caractérisé en ce qu'une charge propulsive comprenant une douille circulaire (36) remplie de matériau pyrotechnique s'étend dans le sens radial à l'intérieur du cylindre (14) entre la surface périphérique intérieure (32) du cylindre (14) et le moyen d'étanchéité (22).

9. Tendeur de ceinture selon la revendication 8, caractérisé en ce que la paroi intérieure (44) de la douille (36) se rétrécit en direction de l'extrémité de sortie du gaz à générer hors de la douille (36) pour comprimer le moyen d'étanchéité (22) et produire ou amplifier la force de blocage radiale exercée sur le câble de traction (16) par le moyen d'étanchéité (22).

10. Tendeur de ceinture selon la revendication 8 ou 9, caractérisé en ce que la paroi intérieure (44) de la douille est conçue de manière flexible dans le sens radial pour produire une force de blocage accrue lors de l'amorçage du matériau pyrotechnique.

11. Tendeur de ceinture selon l'une des revendications 8 à 10, caractérisé en ce que des orifices de sortie de gaz dans la douille (36) et la forme de celle-ci sont adaptées mutuellement afin que, dans la zone des orifices de sortie de gaz, le gaz généré ne soit pas dirigé directement vers la pièce de liaison.

12. Tendeur de ceinture selon l'une des revendications précédentes, caractérisé en ce que le moyen d'étanchéité (22) est conçu sous la forme d'un amortisseur pour une pièce de butée qui est fixée à la pièce de liaison et qui rencontre le moyen d'étanchéité (22) au terme de la course de mise en tension.

13. Tendeur de ceinture selon la revendication 12, caractérisé en ce que le moyen d'étanchéité (22) est déplacé axialement par la pièce de butée qui le rencontre.

14. Tendeur de ceinture selon l'une des revendications précédentes, caractérisé en ce que la pièce de liaison est un câble de traction (16) sur lequel est appliqué, au moins dans la zone du moyen d'étanchéité (22), un revêtement ou qui est imprégné de matériau de revêtement durcissant.

15. Tendeur de ceinture selon l'une des revendications précédentes, caractérisé en ce que le moyen d'étanchéité (22) est conçu sous la forme d'un moyen d'étanchéité en matière synthétique pulvérisé dur la pièce de liaison.

16. Tendeur de ceinture selon l'une des revendications 1 à 14, caractérisé en ce que le moyen d'étanchéité (22) est un moyen d'étanchéité en matière synthétique, et la pièce de liaison est scellée dans le moyen d'étanchéité (22).
